# EUROPÄISCHE PATENTSCHRIFT

(11) **EP 2 574 388 B1**
(45) Veröffentlichungstag und Bekanntmachung des Hinweises auf die Patenterteilung: **01.03.2017**
(21) Anmeldenummer: 12195274.1
(22) Anmeldetag: 21.12.2007
(51) Int. Cl.: B01D 17/00, B01D 36/00, B01D 29/11, F02M 37/22

(54) **Kraftstofffilter**
Fuel filter
Filtre à carburant

(30) Priorität: 23.12.2006 DE 202006019301 U
(43) Veröffentlichungstag der Anmeldung: 03.04.2013
(62) Teilanmeldung aus: 07858099.0
(73) Patentinhaber: MANN + HUMMEL GMBH, 71638 Ludwigsburg (DE)
(72) Erfinder: Klein, Martin, 71634 Ludwigsburg (DE); Rösgen, André, 73630 Remshalden (DE)

(56) Entgegenhaltungen:
- WO-A1-01/34273
- CA-A- 963 400
- DE-A1- 10 138 695
- DE-A1- 10 350 781
- US-A1- 2003 121 858

## Beschreibung

### Technisches Gebiet

Die Erfindung betrifft einen Kraftstofffilter mit einer Vorrichtung zum Abscheiden von Wasser aus dem Kraftstoff, insbesondere Dieselkraftstoff.

### Stand der Technik

Die US 4,740,299 offenbart einen Kraftstofffilter, der in seinem Gehäuse einen Sammelraum für das aus dem Kraftstoff ausgeschiedene Wasser aufweist, welcher zum Entfernen des Wassers mit einem Auslass versehen ist. Der Auslass ist zum Entfernen des gesammelten Wassers aus dem Kraftstofffilter über ein manuell betätigbares Ventil zu öffnen. Mit diesem Kraftstofffilter ist die Abscheidung von Wasser aus dem Kraftstoff nur bedingt möglich, denn das im Kraftstoff emulgierte Wasser tritt z.T. mit dem Kraftstoff durch das Filterelement und wird abströmseitig durch den dort herrschenden Unterdruck mit dem Kraftstoff zur Brennkraftmaschine gesaugt. Aus der US2003/0121858 A1 ist eine Vorrichtung zum Abscheiden von Wasser aus Kohlenwasserstoffen bekannt, bei welcher eine am Gehäuse angeschlossene Pumpe zur Rückführung des Filtrats aus einem Sedimentationsraum dient.

Der Erfindung liegt daher die Aufgabe zugrunde, einen Kraftstofffilter zu schaffen, bei welchem das gesammelte Wasser nicht manuell entfernt werden muss und durch den insbesondere der Abscheidegrad des im Kraftstoff emulgierten Wassers verbessert ist.

Diese Aufgabe wird durch einen Kraftstofffilter mit den Merkmalen des Anspruchs 1 gelöst.

### Offenbarung der Erfindung

Durch die erfindungsgemäße Merkmalskombination wird eine Trennung von Partikelfiltration und Wasserabscheidung erreicht, wobei der aus dem Filterelement bereits als Tropfen austretende Anteil des Wassers unmittelbar in den unterhalb des Filtergehäuses angeordneten Behälter absinkt. Der dann noch im Kraftstoff emulgierte Wasseranteil trifft mit dem Kraftstoff auf das Siebgewebeelement und dort werden Wasserperlen gebildet, die als Tropfen in den Behälter absinken. Dass nur ein geringer Teil des im Kraftstoff emulgierten Wassers bis an das Siebgewebeelement gelangt, wird auch dadurch erreicht, dass die Einrichtung zur Umlenkung des Kraftstoffs zwischen dem Filterelement und dem Siebgewebeelement aufgrund der starken Richtungsänderung die Bestandteile mit größerer Masse weitestgehend tangential bzw. zentrifugal abscheidet.

Als besonders zweckmäßig wird erachtet, daß die Einrichtung zur Umlenkung einen Gehäuseeinsatz umfasst, der in seinem unteren Bereich mindestens eine Öffnung aufweist, die geodätisch tiefer liegt als das Filterelement. Ein solcher Gehäuseeinsatz ist im Aufbau sehr einfach und es ist kein zusätzlicher Platzbedarf notwendig. Die Anordnung der Öffnung im unteren Bereich führt dazu, dass der Kraftstoff eine sehr starke Richtungsänderung nach oben erfährt, wobei der Wasseranteil aufgrund der größeren Dichte seine Bewegung nach unten fortsetzt. Es ist außerdem vorteilhaft, dass das Siebgewebeelement im Wesentlichen hülsenförmig ausgebildet und der Gehäuseeinsatz rohrförmig ist, wobei zwischen Siebgewebeelement und Gehäuseeinsatz eine Ringkammer gebildet ist, die an ihrem oberen Ende geschlossen ist. Durch diese Bauform kann das Siebelement mit dem Gehäuseeinsatz zentrisch innerhalb des Filterelementes angeordnet werden. Dadurch ergibt sich auch der Vorteil, dass beim Austausch des Filterelementes zwangsläufig auch das Siebgewebeelement ausgetauscht wird, so dass nach jedem Wartungsintervall der volle Abscheidegrad sowohl des Filterelementes als auch des Siebgewebeelementes zur Verfügung steht. Gemäß einer zweckmäßigen Ausgestaltung umfasst das Siebgewebeelement zwei Einheiten, von denen eine das Wasser als Perle abscheidet und die andere luftdurchlässig ist. Das Siebgewebeelement besteht vorzugsweise aus einem hydrophoben Material, dessen Maschenweite zwischen 5 µm und 500 µm liegt. Als ein solches Material kommt insbesondere Polyamid in Betracht. Zum gleichmäßigen Eintrag des Wassers in den Behälter können im unteren Bereich des Filtergehäuses Leitbleche für die absinkenden Wassertropfen angeordnet sein.

Erfindungsgemäß sind in dem Behälter eine bedarfsweise einschaltbare Pumpe und ein dieser in Strömungsrichtung nachgeordnetes Rückschlagventil angeordnet, wobei das Rückschlagventil einen vorgegebenen Öffnungsdruck aufweist. Durch diese Pumpe kann je nach Notwendigkeit das Wasser durch das Rückschlagventil aus dem Behälter gepumpt werden. Um auf einfache Weise zu ermitteln, wann ein Abpumpen des Wassers erfolgen soll, ist ein Pegelsensor vorgesehen. Somit arbeitet die Pumpe nur dann, wenn der Pegelsensor das Vorliegen von Wasser im Behälter anzeigt. Durch das Erfassen eines unteren Pegelwertes kann außerdem sichergestellt werden, dass kein Kraftstoff abgepumpt wird und somit auch nicht entweichen kann. Dies wird weiterhin dadurch erreicht, dass das Ventil schließt, sobald die Pumpe abschaltet und damit ein weiterer Abfluss von Flüssigkeit ausgeschlossen ist.

Es ist außerdem von Vorteil, dass das Ventil und die Pumpe zu einer Baueinheit zusammengefasst sind, da diese Baueinheit auf einfache Weise in dem Behälter montiert werden kann. Um bei niedrigen Umgebungstemperaturen ein Einfrieren des abgeschiedenen Wassers zu verhindern und somit das Abpumpen des Wassers zu ermöglichen, ist vorzugsweise der Pumpe eine Heizeinrichtung zugeordnet, wobei zur selbständigen Regelung der Heizleistung die Heizeinrichtung ein PTC-Element umfassen kann.

Gemäß einer zweckmäßigen Weiterbildung ist der Behälter mit einem Auslass versehen, an den sich ein Auffangraum anschließt, der eine Substanz enthält, die eine Flüssigkeit speichert. Durch diese Maßnahme werden im Wasser enthaltene Bestandteile wie Kohlenwasserstoffe von der Substanz absorbiert, wobei das Wasser mit der Zeit verdunstet und die Kohlenwasserstoffe zurückbleiben. Vorteilhaft ist als Substanz zur Speicherung der Flüssigkeit eine Schüttung saugfähiger Festkörper vorgesehen, welche bedarfsweise sehr einfach aus der Vorrichtung entfernt und durch eine frische Schüttung ersetzt werden kann.

Sofern der Auffangraum eine wenigstens abschnittsweise permeable Wandung aufweist, kann das verdunstete Wasser durch die Wandung austreten und dort gesammelt werden. Die Wandung kann dabei aus einem Vlies oder einer Membran bestehen, wobei ein beutelartiges Gebilde entsteht, welches an dem Auslass des Behälters angeordnet werden kann. Das verdunstete Wasser ist frei von Schmutzpartikeln oder Schadstoffen, die in der Schüttung zurückbleiben, und kann nach dem Durchtritt der permeablen Wandung aufgefangen und einer weiteren Nutzung zugeführt oder aus dem Fahrzeug abgeleitet werden. An der Wandung des Sammelbehälters kondensiert das verdunstete Wasser und wird an dessen Boden gesammelt und kann durch eine bedarfsweise freigebbare Ablassöffnung des Sammelbehälters entnommen werden. Vorteilhaft ist in dem Auffangraum eine in einer permeablen Wandung aufgenommene Schüttung angeordnet, die aus einem Flüssigkeit speichernden Material besteht. Durch eine große Oberfläche der permeablen Wandung der Schüttung saugfähiger Festkörper kann eine optimale Abführung der verdunsteten Wasserdämpfe erfolgen. Eine größere Menge der Schüttung erleichtert dabei die Verdunstung. Des Weiteren kann der Verdunstungsvorgang in der schwammartigen Schüttung durch Anordnung einer Heizeinrichtung in dem Auffangraum gefördert werden. Als Material für die Schüttung kommen insbesondere Aktivkohle, Tonerde oder ähnliche Materialien in Betracht.

### Kurze Beschreibung der Zeichnungen

Ein Ausführungsbeispiel der Erfindung ist nachstehend anhand der Zeichnung näher erläutert. Es zeigen:
Fig. 1 eine schematische Darstellung eines Kraftstofffilters mit einer Vorrichtung zum Abscheiden und Abführen von Wasser aus einem Kraftstoff,
Fig. 2 eine etwas detailliertere Darstellung der Vorrichtung zum Abführen von Wasser aus dem Behälter,
Fig. 3 eine schematische Darstellung der elektrischen Verknüpfung der einzelnen Aggregate der Vorrichtung nach Fig. 2.

### Ausführungsform(en) der Erfindung

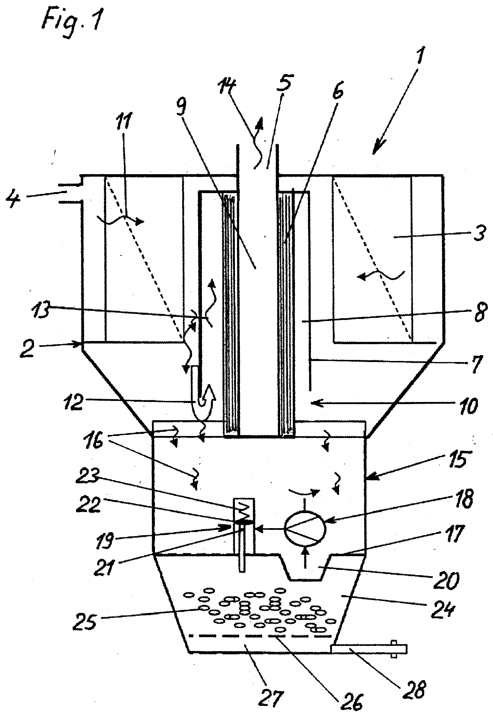

Die Fig. 1 zeigt einen Kraftstofffilter 1, der im Wesentlichen aus einem Filtergehäuse 2 mit einem Zulaufanschluss 4 und einem Rücklaufanschluss 5 sowie einem strömungsmäßig zwischen diesen Anschlüssen befindlichen Filterelement 3 besteht. Konzentrisch zu dem Filterelement 3 ist radial innerhalb von diesem ein Gehäuseeinsatz 7 angeordnet, in dem sich ebenfalls konzentrisch ein Siebgewebeelement 6 befindet. Zwischen dem Gehäuseeinsatz 7 und dem Siebgewebeelement 6 befindet sich eine Ringkammer 8, die über eine am unteren Ende des Gehäuseeinsatzes 7 angeordnete Öffnung 10 zugänglich ist. Radial innerhalb des Siebgewebeelementes 6 ist ein Ausgangsraum 9 gebildet, an dem der Rücklaufanschluss 5 angeordnet ist.

Der zu filternde Kraftstoff tritt durch den Zulaufanschluss 4 in das Filtergehäuse 2 ein und wird gemäß Pfeil 11 durch das Filterelement 3 geführt, in dem die Schmutzpartikel ausgefiltert werden. Der somit gefilterte Kraftstoff wird im Filtergehäuse 2 nach unten geführt, da der Gehäuseeinsatz 7 ausschließlich in seinem unteren Bereich die Öffnung 10 aufweist. Wie durch den Umlenkpfeil 12 dargestellt, wird der Kraftstoff in seiner Strömungsrichtung um ca. 180° umgelenkt und gemäß Pfeil 13 in der Ringkammer 8 nach oben geführt. Für den Durchtritt des Kraftstoffs durch das Siebgewebeelement 6 steht selbstverständlich die gesamte Oberfläche des hülsenförmigen Siebgewebeelementes 6 zur Verfügung. Der vollständig gefilterte Kraftstoff befindet sich dann in dem Ausgangsraum 9, von wo er durch den Rücklaufanschluss 5 abgesaugt wird.

In Kraftstoffen, insbesondere Dieselkraftstoff, ist in der Regel ein Wasseranteil enthalten, der im Kraftstoff emulgiert ist. Beim Durchtritt des Kraftstoffs durch das Filterelement 3 tritt ein Anteil des zuvor noch emulgierten Wassers bereits als Tropfen an der Reinseite des Filterelementes 3 aus, wobei diese Tropfen mit dem Kraftstoffstrom in dem Filtergehäuse 2 nach unten geführt werden. Diese Wassertropfen sinken unmittelbar in einen unterhalb des Filtergehäuses 2 angeordneten Behälter 15 ab. Durch die extreme Richtungsänderung des Kraftstoffs gemäß dem Umlenkpfeil 12 werden noch im Kraftstoff emulgierte Wasseranteile ebenfalls weiter nach unten geführt, da sie aufgrund ihrer höheren Dichte die starke Umlenkung nicht mitmachen können. Der dann noch im Kraftstoff emulgierte Wasseranteil trifft mit dem Kraftstoff auf das Siebgewebeelement 6, so dass dort Wasserperlen gebildet werden, die als Tropfen in den Behälter 15 absinken.

Der unterhalb des Filtergehäuses 2 angeordnete Behälter 15 ist in seinem Innenraum mit Kraftstoff gefüllt. Die aus dem Kraftstoff auf die oben beschriebene Weise abgeschiedenen Wassertropfen sinken in Pfeilrichtung 16 ab. Es bildet sich somit an einem Boden 17 eine vom Kraftstoff getrennte Wasserschicht. Das Wasser ist über einen Auslass 21 abführbar, welcher als Auslasskanal ausgestaltet und von einem Rückschlagventil 19 freigebbar ist. Das Rückschlagventil 19 weist ein Verschlussglied 22 auf, welches gegen die Kraft einer Druckfeder 23 von einer Ventilöffnung am vorderen Ende des Auslasskanals 21 abhebbar ist. Stromauf des vom Ventil 19 verschlossenen Auslasskanals 21 ist eine elektrische Pumpe 18 angeschlossen, welche bei Erreichen eines bestimmten Wasserfüllstandes im Behälter 15 in Betrieb genommen wird. Dabei ist die Ausbildung einer Absenkung 20 im Behälterboden 17 zweckmäßig, in dem sich das Wasser sammelt und welche bei Erreichen eines bestimmten Füllstandes geleert wird. Arbeitet die Pumpe 18, so beaufschlagt ihr Förderdruck das Ventilschließglied 22 gegen die Rückstellkraft der Feder 23 und öffnet das Ventil 19. Das Rückschlagventil 19 ist auf einen Öffnungsdruck von 1 Bar bis 5 Bar, vorzugsweise 3 Bar ausgelegt, so dass sichergestellt ist, dass eine Öffnung nur bei Inbetriebnahme der Pumpe 18 erfolgt und ein unerwünschter Austritt von Flüssigkeit aus dem Behälter 15 ausgeschlossen ist.

Der Auslasskanal 21 führt in einen an den Behälter 15 angeschlossenen Auffangraum 24, welcher eine Schüttung 25 saugfähiger Festkörper wie Aktivkohle oder Tonerde enthält. Das Wasser aus dem Behälter 15 wird von der Schüttung 25 nach Art eines Schwamms aufgesaugt. Mit der Zeit verdunstet das Wasser vorzugsweise durch Zuführung von Luft oder Wärme, während Schmutzanteile wie beispielsweise Kohlenwasserstoffe in der Schüttung 25 zurückbleiben. Der Boden des Auffangraums 24 ist als permeable Wand 26 ausgebildet, welche gleichzeitig einen Sammelbehälter 27 aus undurchlässigem Material begrenzt. Das aus der Schüttung 25 verdunstete Wasser kann durch die permeable Wand dringen und kondensiert in dem angeschlossenen Sammelbehälter 27. Das in dem Sammelbehälter 27 aufgefangene saubere Wasser kann über eine bedarfsweise freigebbare Auslassöffnung 28 einer weiteren Nutzung zugeführt werden.

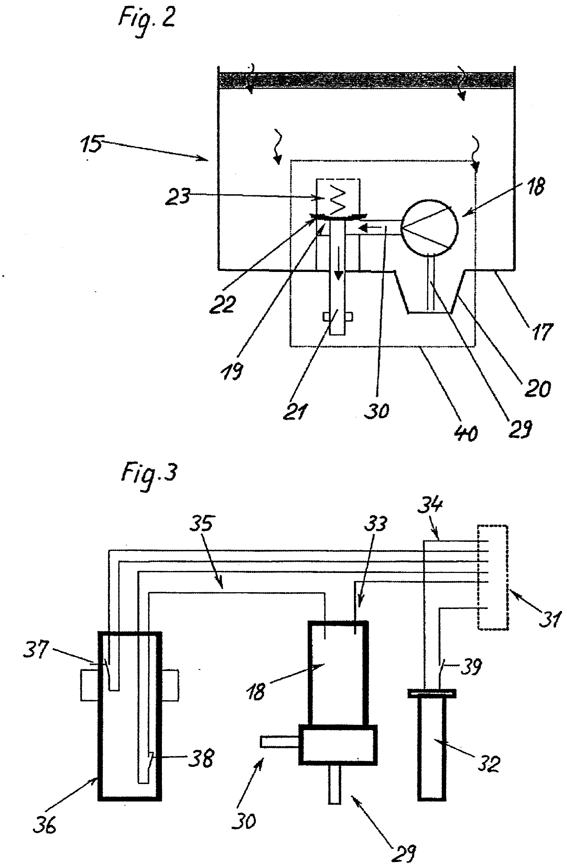

In Fig. 2 ist dargestellt, dass zur Abführung des Wassers aus dem Behälter 15 die Vorrichtung vorgesehen ist, welche mit Hilfe der Pumpe 18 das überschüssige Wasser aus dem Behälter 15 durch den Auslasskanal 21 abführt. Anstelle einer Pumpe kann auch ein Ventil angewendet werden, das zum Ableiten des überschüssigen Wassers geöffnet wird. Die Pumpe 18 ist in dem Behälter 15 angeordnet und hat eine Saugleitung 29 und eine Druckleitung 30. Der Auslasskanal 21 ist von dem Rückschlagventil 19 verschlossen, welches bei Inbetriebnahme der Pumpe 18 unter dem Förderdruck der Pumpe öffnet. Dazu ist das Rückschlagventil 19 mit einem vom vorderen Rand des Auslasskanals 21 abhebbaren Verschlussglied 22 ausgestattet, wobei das Verschlussglied 22 im Ausführungsbeispiel eine am Rand eingespannte Membran ist, die bei Druckbeaufschlagung nach oben gewölbt wird und damit die vordere Öffnung des Auslasskanals 21 frei gibt. Die Ventilfeder 23 sorgt dafür, dass bei nachlassendem Pumpendruck die Membran in Schließstellung des Ventils 19 gelangt. Sobald die Pumpe 18 Druck auf das Ventilschließglied 21 ausübt, wird dieses gegen die Rückstellkraft der Ventilfeder 23 verschoben und der Auslasskanal 21 zum Abführen des Wassers aus dem Behälter 15 geöffnet. Der Pumpendruck ist ausreichend, um auf die wirksame Fläche des Ventilschließgliedes 22 eine Öffnungskraft auszuüben, wenn Systemdrücke von >8 Bar auftreten können. Der Betrieb der Pumpe 18 erfolgt vorzugsweise beim Abstellen einer Brennkraftmaschine. In dieser Betriebsphase können im Kraftstoffsystem entsprechend hohe Systemdrücke auftreten.

Die Pumpe 18 und das Ventil 19 sind als gemeinsame Baueinheit 40 ausgebildet, welche am Boden 17 des Behälters 15 montiert wird. Die Baueinheit 40 kann dabei eine kompakte, beispielsweise zylindrische Einheit sein, die vorteilhaft in der Absenkung 20 des Behälterbodens 17 aufgenommen werden kann. In der Absenkung 20 des Behälterbodens 17 kann das Wasser gesammelt werden, welches alsbald von der Pumpe 18 selbstständig aus dem Behälter 15 entfernt wird.

Die Fig. 3 zeigt eine schematische Darstellung der elektrischen Verschaltung der Pumpe 18 und deren Betätigung. Die Pumpe 18 wird von einer Steuereinheit 31 gespeist und über eine Steuerleitung 33 ein- und ausgeschaltet, wodurch bedarfsweise Wasser über die Saugleitung 29 in die Druckleitung 30 der Pumpe 18 gefördert wird (Fig. 2). Die in der gemeinsamen Baueinheit 40 am Boden des Behälters 15 (Fig. 2) angeordnete Vorrichtung zur Abführung des Wassers enthält auch einen Heizstab 32, der über die elektrische Steuerung 31 der Pumpe 18 mittels einer Schaltleitung 34 elektrisch versorgt wird. Ein Ein- und Ausschalten der Heizeinrichtung 32 kann dabei über die Steuereinheit 31 erfolgen. Im vorliegenden Ausführungsbeispiel ist eine selbstständige Inbetriebnahme und Ausschaltung der Heizeinrichtung 32 über einen Bimetallschalter 39 vorgesehen. Im Falle des Einsatzes von PTC-Elementen erübrigt sich ein solcher Schalter.

Die Baueinheit 40 der Vorrichtung zur Wasserabführung umfasst einen Pegelsensor 36, der im Wesentlichen aus zwei in geodätisch unterschiedlichen Höhen angeordneten Messfühlern 37, 38 besteht. Die Messfühler 37, 38 werden elektrisch von der Steuereinheit 31 versorgt. Sobald der obere vom Boden des Behälters 15 weiter entfernte Messfühler 37 einen Wasserkontakt hat und damit einen entsprechend hohen Füllstand im Behälter 15 detektiert, wird der Steuereinheit 31 ein entsprechender Impuls erteilt, um die Pumpe 18 beim Stillsetzen der Brennkraftmaschine zum Abführen des Wassers aus dem Behälter in Betrieb zu nehmen. Das Abschalten der Pumpe 18 wird von dem unteren Messfühler 38 veranlasst, welcher über eine Signalleitung 35 elektrisch mit der Pumpe 18 verbunden ist und bei Kontakt mit dem auf dem Wasser schwimmenden Kraftstoff selbsttätig die Pumpe 18 abschaltet. Alternativ kann die Signalleitung 35 des unteren Messfühlers 38 mit der Eingangsseite der Steuereinheit 31 verbunden sein, welche bei Eingang des entsprechenden Messsignals die Pumpe abschaltet.

Alternativ zu der Ausgestaltung des Pegelsensors 36 mit zwei in unterschiedlichen Höhen angeordneten Messfühlern kann ein Schwimmschalter vorgesehen sein, welcher bei hohem Wasserfüllstand im Behälter 15 die Pumpe 18 in Betrieb nimmt und nach dem Absenken des Wasserpegels für ein Abschalten der Pumpe sorgt. Die Messfühler 37, 38 detektieren dabei zuverlässig die Phasengrenze zwischen Kraftstoff und Wasser in dem Behälter und verhindern zuverlässig einen Kraftstoffaustritt aus dem Behälter, da die Pumpe jedenfalls abschaltet, bevor die Pumpe Kraftstoff erfasst.

Ein Beispiel für das Siebgewebe wird nachfolgend beschrieben: Das Siebgewebe besteht aus einem Polyamid PA6 oder PA6.6; PA6.10, PA11 oder PA12. Die Imprägnierung dieses Siebgewebes weist hydrophobe Eigenschaften auf und wird beispielsweise durch eine Teflonbeschichtung erreicht. Die Maschenweite liegt im Bereich von 5 bis 100 µm, bevorzugt beträgt sie 20 bis 30 µm. Der Fadendurchmesser liegt im Bereich von 25 bis 50 µm, bevorzugt bei 30 µm. Das Flächengewicht des Siebgewebes beträgt 20 bis 50 g/m², die Dicke liegt im Bereich von 40 bis 70 µm. Der Berstdruck liegt über 4 bar.

## Patentansprüche

1. Kraftstofffilter (1) mit einer Vorrichtung zum Abscheiden von Wasser aus dem Kraftstoff, wobei die Vorrichtung mindestens ein in einem Filtergehäuse (2) angeordnetes Siebgewebeelement (6) umfasst, das sich stromab von einem Filterelement (3) zur Partikelfilterung des Kraftstoffs befindet, und mit einem unterhalb des Siebgewebeelementes (6) am Filtergehäuse (2) angeordneten Behälter (15), in dem sich die abgeschiedenen Wassertropfen sammeln, und mit einer Einrichtung zum Umlenken des Kraftstoffs zwischen dem Filterelement (3) und dem Siebgewebeelement (6), **dadurch gekennzeichnet, dass** in dem Behälter (15) eine bedarfsweise einschaltbare Pumpe (18) und ein dieser in Strömungsrichtung nachgeordnetes Rückschlagventil (19) angeordnet sind, wobei das Rückschlagventil (19) einen vorgegebenen Öffnungsdruck aufweist, wobei durch die Pumpe (18) je nach Notwendigkeit das Wasser durch das Rückschlagventil (19) aus dem Behälter (15) gepumpt werden kann, indem die Pumpe (18) in Abhängigkeit eines Pegelsensors (36) zur Erfassung des Wasserpegels im Behälter (15) schaltbar ist.

2. Kraftstofffilter nach Anspruch 1, **dadurch gekennzeichnet, dass** das Rückschlagventil (19) ein vom Förderdruck der Pumpe (18) betätigtes Ventilschließglied (22) umfasst.

3. Kraftstofffilter nach Anspruch 2, **dadurch gekennzeichnet, dass** das Ventilschließglied (22) eine an ihrem Rand eingespannte Membran ist, deren mittlerer Bereich einen Kanal verschließt.

4. Kraftstofffilter nach einem der Ansprüche 1 bis 3, **dadurch gekennzeichnet, dass** das Ventil (19) und die Pumpe (18) zu einer Baueinheit (40) zusammengefasst sind.

5. Kraftstofffilter nach einem der Ansprüche 1 bis 4, **dadurch gekennzeichnet, dass** der Pegelsensor (36) zwei in unterschiedlichen Höhen im Behälter (15) angeordnete Messfühler (37, 38) umfasst.

6. Kraftstofffilter nach einem der Ansprüche 1 bis 5, **dadurch gekennzeichnet, dass** der Pumpe (18) eine Heizeinrichtung (32) zugeordnet ist.

7. Kraftstofffilter nach einem der Ansprüche 1 bis 6, **dadurch gekennzeichnet, dass** das Ventil auf einen Öffnungsdruck von 1 Bar bis 3 Bar eingestellt ist.

8. Kraftstofffilter nach einem der Ansprüche 1 bis 7, **dadurch gekennzeichnet, dass** der Behälter (15) mit einem Auslass (21) versehen ist, an den sich ein Auffangraum (24) anschließt, der eine Substanz enthält, die eine Flüssigkeit speichert, wobei als Flüssigkeit speichernde Substanz eine Schüttung (25) saugfähiger Festkörper vorgesehen ist und/oder die Flüssigkeit speichernde Substanz (25) Aktivkohle oder Tonerde oder ein anderes Kohlenwasserstoff absorbierendes Medium ist.

9. Kraftstofffilter nach Anspruch 8, **dadurch gekennzeichnet, dass** der Auffangraum (24) wenigstens abschnittsweise eine permeable Wandung (26) aufweist.

10. Kraftstofffilter nach Anspruch 9, **dadurch gekennzeichnet, dass** die Wandung (26) aus einem Vlies besteht.

11. Kraftstofffilter nach einem der Ansprüche 8 bis 10, **dadurch gekennzeichnet, dass** die permeable Wandung (26) den Auffangraum (24) von einem Sammelraum (27) abgrenzt, wobei der Sammelraum (27) aus undurchlässigem Material ausgeführt ist und eine bedarfsweise freigebbare Ablassöffnung (28) aufweist.

## Claims

1. Fuel filter (1) with an apparatus for separating water from the fuel, wherein the apparatus comprises at least one sieve cloth element (6) disposed downstream of a filter element (3) for particle filtration of the fuel and disposed in a filter housing (2), and with a reservoir (15) in which separated water drops are collected and which is disposed underneath the sieve cloth element (6) at the filter housing (2), and with a means for deviating the fuel between the filter element (3) and the sieve cloth element (6), **characterized in that** in the reservoir (15) a temporarily switchable pump (18) and a non-return valve (19) disposed downstream in flow direction thereof, wherein the non-return valve (19) features a predefined opening pressure, wherein by means of the pump (18) the water can be pumped according to need through the non-return valve (19) out of the reservoir (15) by switching the pump (18) depending on a level sensor (36) for detecting the water level in the reservoir (15).

2. Fuel filter according to claim 1, **characterized in that** the non-return valve (19) comprises a valve closing member (22) activated by the delivery pressure of the pump (18).

3. Fuel filter according to claim 2, **characterized in that** the valve closing member (22) is a membrane clamped at its edge with its central area closing a duct.

4. Fuel filter according to one of the claims 1 to 3, **characterized in that** the valve (19) and the pump (18) are combined to form a structural unit (40).

5. Fuel filter according to one of the claims 1 to 4, **characterized in that** the level sensor (36) comprises two sensors (37, 38) disposed at different heights in the reservoir (15).

6. Fuel filter according to one of the claims 1 to 5, **characterized in that** a heating apparatus (32) is allocated to the pump (18).

7. Fuel filter according to one of the claims 1 to 6, **characterized in that** the valve is adjusted to an opening pressure from 1 bar to 3 bar.

8. Fuel filter according to one of the claims 1 to 7, **characterized in that** the reservoir (15) has an outlet (21) connected to a catchment chamber (24) which contains a substance that stores a liquid, wherein a bed (25) of absorbent solids is provided as liquid-storing substance and/or wherein the liquid-storing substance (25) is activated carbon or alumina or another hydrocarbon-absorbing medium.

9. Fuel filter according to claim 8, **characterized in that** the catchment chamber (24) features at least sectionwise a permeable wall (26).

10. Fuel filter according to claim 9, **characterized in that** the wall (26) is made of a fleece.

11. Fuel filter according to one of the claims 8 to 10, **characterized in that** the permeable wall (26) separates the catchment chamber (24) from a collecting chamber (27), wherein the collecting chamber (27) is made of impermeable material and features a temporarily releasable discharge opening (28).

## Revendications

1. Filtre à carburant (1) avec un dispositif destiné à séparer l'eau du carburant, le dispositif comprenant au moins un élément en gaze métallique (6) disposé dans un boîtier de filtre (2), lequel élément est positionné en aval d'un élément filtrant (3) servant à filtrer les particules du carburant, et avec un récipient (15) placé sur le boîtier de filtre (2), en dessous de l'élément en gaze métallique (6), dans lequel sont collectées les gouttes d'eau séparées, et avec un dispositif servant à dévier le carburant entre l'élément filtrant (3) et l'élément en gaze métallique (6), **caractérisé en ce qu**'une pompe (18) pouvant être activée en cas de besoin et une vanne antiretour (19) montée en aval de cette pompe dans le sens du flux sont placées dans le réservoir (15), la vanne antiretour (19) étant soumise à une pression d'ouverture prédéfinie, l'eau pouvant, selon les besoins, être pompée hors du récipient (15) au moyen de la pompe (18) à travers la vanne antiretour (19), la pompe (18) pouvant à cet effet être activée en fonction d'un capteur de niveau (36) qui enregistre le niveau d'eau au sein du récipient (15).

2. Filtre à carburant selon la revendication 1, **caractérisé en ce que** la vanne antiretour (19) comprend un élément de fermeture de vanne (22) actionné par la pression de refoulement de la pompe (18).

3. Filtre à carburant selon la revendication 2, **caractérisé en ce que** l'élément de fermeture de vanne (22) est une membrane fixée à son bord dont la zone centrale obture un canal.

4. Filtre à carburant selon l'une des revendications 1 à 3, **caractérisé en ce que** la vanne (19) et la pompe (18) sont regroupées en une unité (40).

5. Filtre à carburant selon l'une des revendications 1 à 4, **caractérisé en ce que** le capteur de niveau (36) est pourvu de deux sondes de mesure (37, 38) montées à des hauteurs différentes dans le récipient (15).

6. Filtre à carburant selon l'une des revendications 1 à 5, **caractérisé en ce qu**'un dispositif de chauffage (32) est affecté à la pompe (18).

7. Filtre à carburant selon l'une des revendications 1 à 6, **caractérisé en ce que** la vanne est réglée à une pression d'ouverture de 1 bar à 3 bar.

8. Filtre à carburant selon l'une des revendications 1 à 7, **caractérisé en ce que** le récipient (15) est pourvu d'une sortie (21) à laquelle est assemblée un espace de réception (24), lequel contient une substance qui stocke un liquide, un lit (25) de matières solides absorbantes étant prévu en tant que substance stockant le liquide et/ou la substance stockant le liquide (25) étant un charbon actif ou de l'argile ou un autre milieu absorbant l'hydrocarbure.

9. Filtre à carburant selon la revendication 8, **caractérisé en ce que** l'espace de réception (24) présente, au moins sur certaines sections, une paroi (26) perméable.

10. Filtre à carburant selon la revendication 9, **caractérisé en ce que** la paroi (26) est constituée d'un non-tissé.

11. Filtre à carburant selon l'une des revendications 8 à 10, **caractérisé en ce que** la paroi (26) perméable sépare l'espace de réception (24) d'un espace collecteur (27), l'espace collecteur (27) étant réalisé dans un matériau imperméable et étant doté d'une ouverture d'évacuation (28) pouvant être ouverte en cas de besoin.
